# FASCICULE DE BREVET EUROPEEN

(11) **EP 2 740 662 B1**
(45) Date de publication et mention de la délivrance du brevet: **25.04.2018**
(21) Numéro de dépôt: 13195305.1
(22) Date de dépôt: 02.12.2013
(51) Int. Cl.: B64C 1/14

(54) **Verrière perfectionnée pour aéronef**
Verbesserte Verglasung für Flugzeuge
Improved glazing for aircraft

(30) Priorité: 04.12.2012 FR 1261591
(43) Date de publication de la demande: 11.06.2014
(73) Titulaire: Airbus Operations, 31060 Toulouse (FR)
(72) Inventeur: Dazet, Francis, 65220 Tournous Darre (FR)
(74) Mandataire: Santarelli

(56) Documents cités:
- EP-A1- 1 300 333
- FR-A1- 2 909 921
- US-A- 2 575 854
- US-A- 4 004 388
- US-A1- 2007 194 177

## Description

L'invention concerne les verrières de cockpit d'aéronefs ainsi que les aéronefs équipés de telles verrières.

Les avions sont généralement pourvus de verrières de cockpit dont les glaces ou vitres sont planes, ce qui confère à la verrière une forme convexe avec de multiples facettes planes qui se raccordent avec la partie avant du fuselage. Cette solution technique permet d'utiliser pour les glaces des verres dont le coût est limité et des encadrements de glace simples. Toutefois, ce type de verrière induit localement une trainée aérodynamique importante.

Pour réduire la trainé aérodynamique de l'avion dans la zone de la verrière, il est connu de recourir pour celle-ci à des glaces qui ont une double courbure. Cette forme incurvée horizontalement et latéralement des glaces se raccorde parfaitement avec la forme du fuselage et permet des gains significatifs de trainée aérodynamique.

De nombreuses verrières d'avions possèdent six glaces (deux en position frontales, deux en position latérales et deux en position arrière, par rapport aux pilotes) dont les deux glaces frontales sont montées et bridées par l'extérieur de l'avion. En effet, la présence des écrans de navigations du cockpit ne permet pas un montage des glaces frontales par l'intérieur de l'avion.

Ce mode de montage des glaces frontales permet un remplacement rapide des glaces, sans contrainte sur l'exploitation de la machine. Le recours à des montages mécaniques des glaces à joints secs permet d'éviter l'utilisation de mastics de colmatage dont la polymérisation peut dépasser 24 heures et qui induisent un démontage et un nettoyage des structures relativement complexe.

Pour les quatre autres glaces, (latérales et arrière), lorsqu'aucun équipement à l'intérieur du cockpit ne l'empêche, le montage se fait de préférence depuis l'intérieur du cockpit car la pression qui règne dans la cabine en régime de croisière favorise l'étanchéité et la sécurité de cette partie de la verrière. Cette solution du montage des glaces par l'intérieur du cockpit est également intéressante pour minimiser la masse des éléments de jonction des glaces avec la structure de la verrière.

Toutefois, le montage de glaces latérales et arrière à double courbure par l'intérieur du cockpit génère une cavité importante, entre la structure et le verre.

En cas d'impacts d'oiseaux sur la verrière du cockpit, ceux-ci se transforment en liquide et gaz qui viennent gaver la ou les cavités. Les déformations des glaces et de la structure d'encadrement qui en résultent peuvent avoir un effet dommageable sur la verrière.

De nombreux avions civils et avions d'armes, de petite taille, qui sont généralement sans aucune pressurisation cabine, ont des verrières à double courbure, mais les solutions techniques de liaison des verres avec la structure ne présentent pas de cavités susceptibles de fragiliser ces zones lors des impacts d'oiseaux.

L'invention vise à fournir une verrière du type précité qui permette d'éviter son endommagement en cas d'impacts d'oiseaux et de conserver un temps de montage et de démontage des glaces aussi faible que possible.

A cet effet, l'invention a pour objet une verrière d'aéronef comprenant au moins une glace, un encadrement contre lequel ladite glace est en appui, au moins une bride de serrage de ladite glace contre ledit encadrement, et au moins une cavité délimitée entre ladite glace, ledit encadrement et ladite bride, cette verrière comportant au moins un profilé adapté pour remplir sensiblement ladite cavité et présentant sur au moins une partie de sa périphérie des reliefs définissant avec une surface en regard des chicanes formant joint.

En cas d'impact d'un oiseau dans la zone de liaison entre l'encadrement et la glace de la verrière, il existe une déformation mécanique des pièces de cette zone. La pression du gaz et du liquide issus de l'oiseau est brutalement appliquée dans cette zone de liaison et, de là, aux chicanes formées entre les reliefs du profilé et la surface en regard. Les chicanes comportent des cavités de chicane séparées les unes des autres par des zones dans lesquelles les reliefs sont en contact ou à faible distance de la surface en regard de sorte que la pression chute de façon importante à chaque passage d'une cavité de chicane à la cavité de chicane suivante et minimise le passage des résidus gazeux et liquides des oiseaux. Ces chicanes, en limitant le passage des résidus gazeux et liquides précités, forment un joint qui sera dénommé dans la suite « joint à chicanes ». Il doit être donné à cette expression « joint à chicanes » la signification qui résulte de la présente description.

Si la glace doit être remplacée, le démontage de celle-ci et le montage d'une nouvelle glace peuvent être menés à bien en quelques heures alors que plus de vingt-quatre seraient nécessaires si la cavité était remplie d'un joint en élastomère polymérisable.

Selon une caractéristique possible de l'invention, lesdits reliefs comprennent des cannelures longitudinales. Ce type de reliefs formant joint à chicanes peut être facilement obtenu par usinage ou moulage du profilé.

Selon une autre caractéristique possible de l'invention, une partie au moins desdites cannelures présentent au moins un bord à arête vive. Des cannelures à arêtes vives s'avèrent particulièrement efficaces pour faire chuter la pression de façon importante et minimiser le passage des résidus gazeux et liquides des oiseaux. La multiplication de bords à arête vive permet de répéter successivement, à chaque cavité de chicane, l'effet d'abaissement important de la pression du gaz et du liquide résultant d'un impact.

Selon une autre caractéristique possible de l'invention, ledit profilé est en un matériau sensiblement rigide. Le profilé est ainsi en mesure de résister aux pressions élevées auxquelles il est soumis en cas d'impacts d'oiseaux dans la zone de liaison entre l'encadrement et la glace de la verrière.

Selon une autre caractéristique possible de l'invention, ledit profilé est métallique. Il peut être par exemple réalisé dans un alliage d'aluminium qui est un matériau facile à usiner et léger.

Selon une autre caractéristique possible de l'invention, ledit profilé est en matériau synthétique, par exemple de type téflon, nylon ou résines chargées de fibres courtes. Ces matériaux ont l'avantage d'être relativement légers, mais le matériau retenu devra avoir une bonne tenue mécanique en compression, à cause de la pression importante, provenant de la liquéfaction et de la gazéification de l'oiseau, lors du choc.

Selon une autre caractéristique possible de l'invention, ledit profilé comporte une âme centrale en un matériau plus souple que sa périphérie. Le profilé, qui sera de préférence en un matériau élastomère, assurera ainsi une fonction d'amortisseur de choc en plus de la fonction de baisse de la pression assurée par les chicanes.

Selon une autre caractéristique possible de l'invention, ledit profilé est fixé à ladite bride, par exemple par collage ou encliquetage, ce qui facilite les opérations de montage et démontage. Dans ce cas, chacun des profilés devra correspondre à la longueur et à la géométrie de chacune des brides.

Selon une autre caractéristique possible de l'invention, ledit profilé comprend un premier élément de profilé et un second élément de profilé, lesdits éléments de profilé comportant des dentures imbriquées formant entre elles lesdites chicanes. Cet agencement permet de donner aux dentures les formes et les dimensions voulues pour optimiser l'effet d'abaissement de la pression en cas d'application brutale d'une pression très élevée dans la zone de liaison entre l'encadrement et la glace de la verrière.

Selon une autre caractéristique possible de l'invention, le premier élément de profilé est fixé audit encadrement et ledit second élément de profilé est fixé à ladite bride, ce qui permet d'assurer une bonne fixation de chacun des deux éléments.

Selon une autre caractéristique possible de l'invention, ledit profilé de remplissage de ladite cavité s'étend sur toute la périphérie de la glace, ce qui permet de combler la totalité de la cavité entourant la glace.

Selon une autre caractéristique possible de l'invention, ledit profilé est en une seule pièce annulaire, ce qui en facilite le montage et le démontage.

Selon une autre caractéristique possible de l'invention, ledit profilé est venu de matière avec ladite bride. Le profilé peut ainsi être usiné dans la masse de la bride, qui peut être par exemple en alliage d'aluminium. La parfaite solidarisation du profilé et de la bride est ainsi assurée avec un coût limité et une très bonne fiabilité.

Selon une autre caractéristique possible de l'invention, lesdits reliefs comprennent au moins une cannelure transversale ménagée dans au moins l'une des faces dudit profilé.

L'invention a également pour objet un aéronef comportant au moins une verrière telle que défini ci-dessus.

D'autres caractéristiques et avantages de l'invention ressortent de la description qui va suivre de modes de réalisation donnés à titre d'exemples et illustrés par les besoins annexés sur lesquels :
- la figure 1 est une vue partielle en élévation latérale et avec arrachements d'une partie d'une verrière de cockpit d'avion vue depuis l'intérieur du cockpit;
- la figure 2 est une vue en coupe selon la ligne 2-2 de la figure 1 ;
- la figure 3 est une vue en coupe selon la ligne 3-3 de la figure 1 ;
- la figure 4 est une vue en coupe selon la ligne 4-4 de la figure 1 ;
- la figure 5 est une vue en coupe selon la ligne 5-5 de la figure 1 ;
- la figure 6 est une vue de détail en coupe et à plus grande échelle illustrant un profilé selon un premier mode de réalisation de l'invention ;
- la figure 7 est une vue en perspective illustrant le profilé de la figure 6 ;
- la figure 8 est une vue similaire à la figure 6 illustrant un deuxième mode de réalisation de l'invention ;
- la figure 9 est une vue similaire à la figure 6 illustrant un troisième mode de réalisation de l'invention ;
- la figure 10 est une vue similaire à la figure 6 illustrant un quatrième mode de réalisation de l'invention ;
- la figure 11 illustre un premier mode de fixation d'un profilé sur une bride ; et
- la figure 12 illustre un deuxième mode de fixation d'un profilé sur une bride.

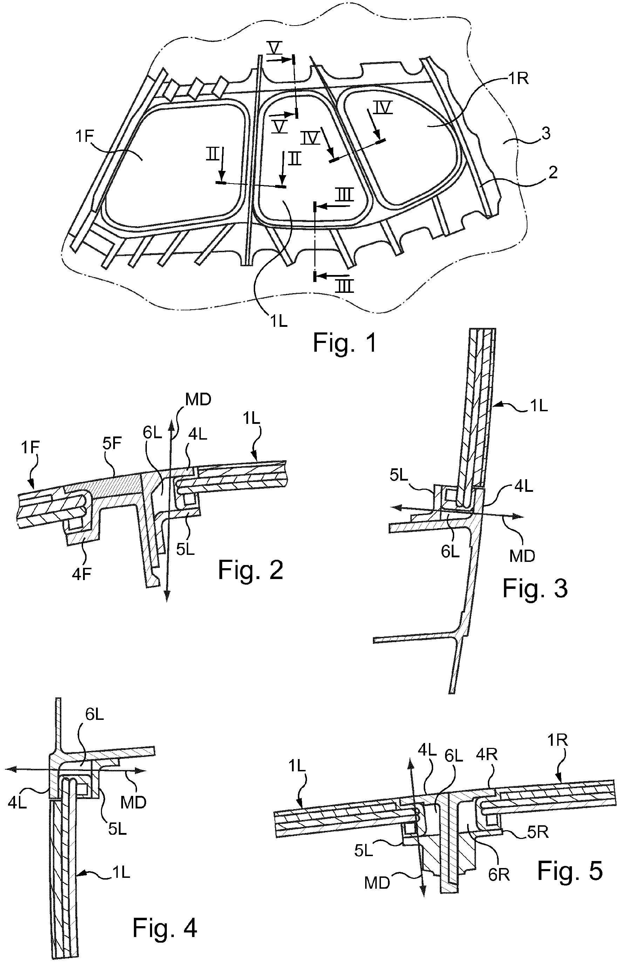

La figure 1 représente une moitié de verrière de cockpit d'avion comprenant une glace frontale 1F, une glace latérale 1L et une glace arrière 1R. L'autre moitié (non représentée) de la verrière est symétrique de celle représentée par rapport à un plan longitudinal de symétrie de l'avion.

Les glaces 1F, 1L et 1R sont montées dans un encadrement désigné dans son ensemble par la référence 2 qui est portée par et solidaire d'une structure 3 de la partie avant du fuselage de l'avion.

La glace frontale 1F est plane et montée dans l'encadrement 2 depuis l'extérieur du cockpit. Elle est maintenue en place contre son encadrement 4F au moyen de brides 5F fixées à l'encadrement 4 par des moyens non représentés au dessin.

Les glaces latérale 1L et arrière 1R sont du type à double courbure, c'est-à-dire qu'elles sont incurvées latéralement et horizontalement pour se raccorder avec la forme du fuselage de l'avion (non représenté) en limitant la trainée aérodynamique.

Le montage sur l'encadrement 2 des glaces latérale 1L et arrière 1R et leur démontage de cet encadrement se fait depuis l'intérieur du cockpit (non représenté), suivant la direction des flèches représentées aux figures 2 à 5.

La glace latérale 1L est maintenue en appui contre son encadrement 4L par des brides 5L représentées sur les figures 2 à 5. Les brides 5L sont fixées à l'encadrement 4L par des moyens conventionnels (non représentés) bien connus de l'homme de métier.

En raison de la double courbure de la glace latérale 1L et de son montage/démontage depuis l'intérieur du cockpit suivant les directions indiquées par les flèches MD sur les figures 2 à 5, une cavité 6L se trouve ménagée entre le bord périphérique de la glace 1L (ou plus exactement le joint qui entoure cette glace), l'encadrement 4L et les brides 5L. Cette cavité 6L s'étend tout autour de la glace latérale 1L.

De même, la glace arrière 1R à double courbure et à montage/démontage par l'intérieur du cockpit conduit à l'existence d'une cavité 6R entre le bord périphérique de la glace 1R (ou plus exactement le joint qui entoure cette glace), son encadrement 4R et sa bride de maintien 5R. Cette cavité 6R s'étend sur toute la périphérie de la glace arrière 1R.

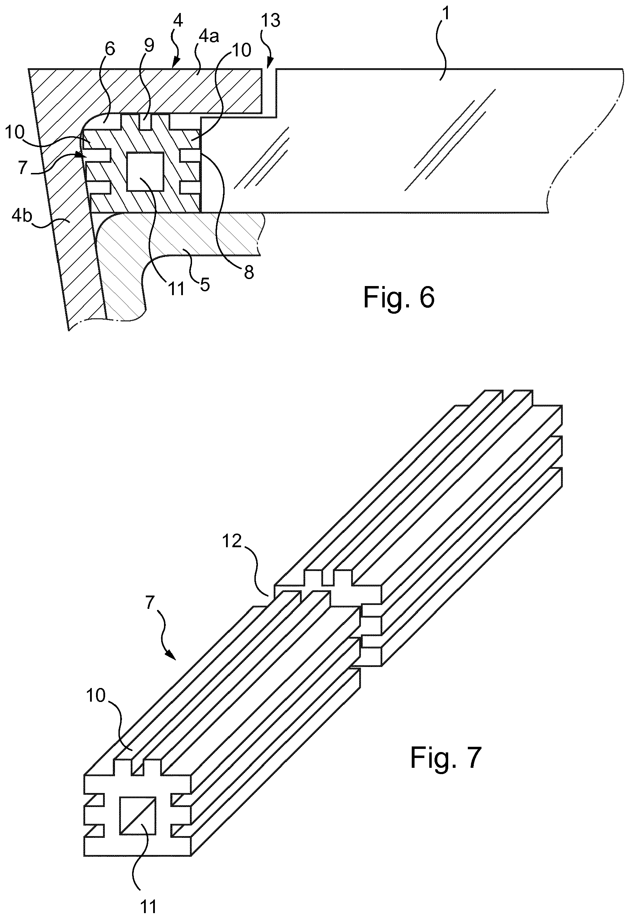

Afin d'éviter que la verrière soit endommagée consécutivement à l'impact d'un oiseau dans la zone de liaison des glaces 1L et 1R avec leur encadrement respectif 4L et 4R, les cavités 6L et 6R sont équipées de joints à chicanes. Ceux-ci n'ont pas été représentés sur les figures 2 à 5 pour la clarté du dessin, mais ils seront maintenant décrits en se référant aux figures 6 à 12

En se référant aux figures 6 et 7, un joint à chicanes selon un premier mode de réalisation de l'invention comprend un profilé 7 disposé dans la cavité 6 ménagée entre le bord périphérique 8 de la glace 1 (ou plus exactement le joint non représenté sur la figure 6 qui entoure cette glace), l'encadrement 4 de la verrière et la bride 5 qui, du côté intérieur de la verrière, maintient la glace 1 en appui contre l'encadrement 4.

De préférence, le profilé 7 remplit la totalité de la cavité 6, aussi bien suivant sa section transversale qu'en direction longitudinale. Si la cavité tubulaire 6 s'étend sur toute la périphérie de la glace 1, de préférence il en va également de même pour le profilé 7.

Le profilé 7 présente sur au moins une partie de sa périphérie des cannelures constituées de rainures longitudinales 9 qui alternent avec des nervures longitudinales en saillie 10, en formant un profil à chicanes. Dans l'exemple de réalisation des figures 6 et 7, le profilé 7 a en section transversale sensiblement une forme de quadrilatère. Un premier côté du quadrilatère est tourné vers le bord périphérique 8 sensiblement plan de la glace 1 (ou plus exactement vers le joint non représenté sur la figure 6 qui entoure cette glace), et présente un profil à chicanes. Le deuxième côté du quadrilatère présentant également un profil à chicanes est tourné vers la face interne sensiblement plane d'une paroi 4a de l'encadrement 4 qui s'étend sensiblement dans le prolongement de la glace 1. Un troisième côté du quadrilatère est orienté vers une face sensiblement plane de l'âme 4b de l'encadrement 4 qui s'étend, transversalement par rapport à la paroi 4a et à la glace 1, vers l'intérieur du cockpit. Ce troisième côté est également pourvu de rainures 9 et nervures 10 formant des chicanes. Enfin, un quatrième côté du quadrilatère est plan et fixé à une face en regard de la bride 5 par collage, encliquetage, etc. ou similaire comme cela sera décrit dans la suite.

Dans le mode de réalisation illustré aux figures 6 et 7, le profilé 7 est creux et présente une cavité intérieure 11, ce qui permet un gain de poids. Ce profilé est en une matière rigide, par exemple un métal tel qu'un alliage d'aluminium. Le profilé 7 est dimensionné de manière que les sommets des nervures 10 affleurent ou soient à très faible distance des parois en regard de la glace 1 et de l'encadrement 4. Les brides 5, qui sont fixées à l'encadrement 4 par des moyens non représentés, maintiennent la glace 1 et le profilé 7 en appui contre la paroi 4a de l'encadrement.

Le profilé 7 peut être réalisé en un ou plusieurs tronçons. Si la cavité 6 s'étend tout autour de la glace 1, il peut être en une seule pièce de forme générale annulaire si son mode de fabrication le permet.

Outre les chicanes longitudinales que forment les rainures 9 et les nervures 10, le profilé 7 peut comporter de place en place suivant sa longueur, des chicanes transversales 12 ménagées dans une ou plusieurs de ses faces comme représenté à la figure 7. Ces chicanes transversales 12 peuvent être constituées, par exemple, par des rainures.

La glace 1 est mise en place contre la paroi 4a de l'encadrement 4 depuis l'intérieur du cockpit situé du côté de la bride 5. L'étanchéité à l'air entre la glace 1 et l'encadrement 4 est assurée par des joints et autres moyens mécaniques conventionnels connus de l'homme de métier et qu'il n'y a pas lieu de décrire en détail dans la présente demande. Le montage de la glace 1 par l'intérieur du cockpit fait que, lorsque l'avion est en croisière et sa cabine pressurisée, la différence entre la pression régnant à l'intérieur du cockpit et celle régnant à l'extérieur de l'avion contribue mécaniquement à plaquer la glace 1 contre l'encadrement 4 et favorise l'étanchéité de cette partie de la verrière.

Cependant, en cas d'impact en vol d'un oiseau dans la zone de liaison 13 entre la glace 1 et son encadrement 4, une déformation des différentes pièces mécaniques de cette zone se produit et des gaz et du liquide à pression très élevée sont brusquement appliqué en direction de la cavité 6.

Dans une telle éventualité, les chicanes longitudinales 9, 10 et transversales 12 du profilé contribuent à faire chuter fortement la pression du gaz et du liquide à chaque passage d'une chicane. Ce phénomène d'abaissement de la pression se répète à chaque franchissement d'une chicane, de sorte qu'après le passage de plusieurs chicanes la pression du gaz et du liquide est rapidement descendue à une valeur compatible avec la bonne tenue mécanique des composants de la verrière.

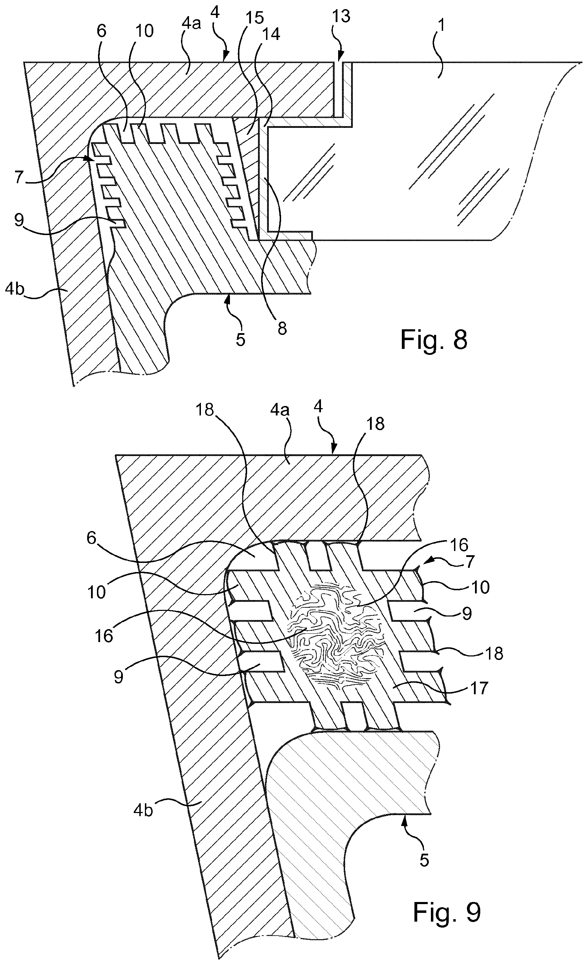

La figure 8 illustre un deuxième mode de réalisation de l'invention dans lequel le profilé 7 est plein et venu de matière avec la bride 5. La bride 5 et le profilé 7 sont de préférence métalliques, par exemple en alliage d'aluminium, et peuvent ainsi être usinés ensemble. La fabrication et le montage des pièces d'assemblage de la glace 1 contre son encadrement 4 se trouvent ainsi simplifiés.

Le profilé 7 de la figure 8 présente en section transversale sensiblement une forme parallélépipédique: la face du profilé 7 tournée vers le bord périphérique 8 de la glace 1 est sensiblement parallèle à sa face tournée vers la paroi ou âme 4b de l'encadrement.

La glace 1 illustrée à la figure 8 comporte sur son bord périphérique 8 un joint d'étanchéité périphérique conventionnel 14, qui n'a pas été représenté à la figure 6 pour la clarté du dessin. Le joint 14, par exemple en silicone, a sensiblement une section transversale en U complémentaire de la section transversale du bord périphérique de la glace 1. Ces formes en U du joint périphérique 14 et du bord 8 permettent d'assurer un encastrement de la glace 1 entre la paroi 4a de l'encadrement 4 et la bride 5. En outre, selon l'exemple de la figure 8, le joint 14 présente un moussage 15 sur sa face sommitale en regard du profilé 7. Ce moussage 15 a en section transversale une forme de coin de manière à présenter une face extérieure parallèle à l'âme 4b de l'encadrement 4 et à la face en regard du profilé 7. Le moussage 15 en forme de coin comble l'espace entre la face sommitale du joint 14, qui est sensiblement perpendiculaire à la paroi 4a de l'encadrement, et la face adjacente du profilé 5 qui est oblique par rapport à cette paroi 4a. Le moussage 15 permet de faciliter l'usinage et/ou la fabrication des différentes pièces car le profilé 7 a des faces latérales parallèles entre elles et à une face latérale de la bride 5 et le bord périphérique de la glace 4 reste sensiblement perpendiculaire au plan d'ensemble de celle-ci.

En cas d'impact d'un oiseau dans la zone de jonction 13 entre l'encadrement 4 et la glace 1, le profilé 7 de la figure 8 procure l'effet de joint à chicanes décrit en regard de l'exemple de la figure 7.

La figure 9 illustre un troisième mode de réalisation du profilé 7 dans lequel celui-ci a une forme d'ensemble similaire au profilé de la figure 6. Dans ce troisième exemple, le profilé 7 est réalisé, par exemple, par moulage d'une matière synthétique (par exemple de type téflon, nylon, résines chargées de fibres courtes, etc.), on bien par moulage ou usinage d'un matériau métallique (alliage d'aluminium par exemple).

De plus, le profilé 7 de la figure 9 comporte une âme 16 en un matériau de densité plus basse que celui dont est constituée la partie périphérique 17 en matériau synthétique ou métallique du profilé 7.

Grâce à son âme 16 de densité plus basse que sa périphérie 17, le profilé 7 remplit également une fonction d'absorbeur de choc en cas d'impact d'un oiseau sur la verrière dans les conditions décrites ci-dessus.

Comme le montre la figure 9, les nervures 10 peuvent présenter dans leur partie sommitale un ou plusieurs bords vifs ou pointus formant des lèvres 18. Ces lèvres 18 permettent d'accentuer l'effet de labyrinthe du joint à chicanes et d'accroître la progressivité de la chute de pression en cas d'impact d'un oiseau.

Dans cet exemple de la figure 9, des chicanes sont prévues sur la totalité de la périphérie du profilé 7. Les rainures 9 et les nervures 10 qui forment les chicanes n'ont pas nécessairement une section rectangulaire ou carrée, cette section pouvant être curviligne comme le montre la figure 9.

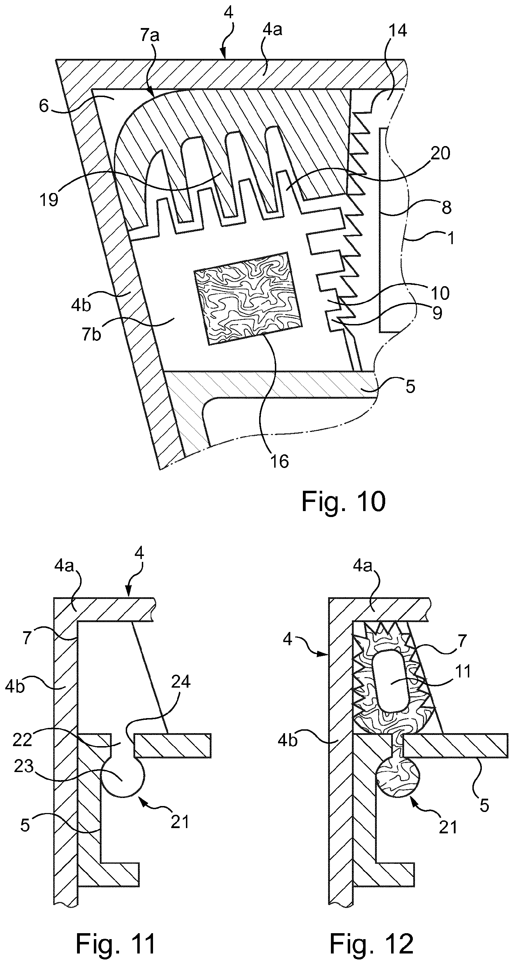

Dans le quatrième mode de réalisation illustré à la figure 10, le joint à chicanes remplissant la cavité 6 comprend deux profilés complémentaires 7a et 7b.

L'un des profilés 7a comporte une série de dents 19 sur l'une de ses faces tournée du côté de la bride 5. Le profilé 7a est fixé, par exemple par collage, aux parois 4a et 4b de l'encadrement 4. La quatrième face du profilé est tournée vers une face indentée par moussage du joint 14 disposé à la périphérie de la glace 1.

Le deuxième profilé 7b comporte une série de dents 20 de même pas que les dents 19, les dents 20 étant imbriquées avec les dents 19. Les dents 19 et 20 ont des hauteurs différentes de sorte qu'un espace est ménagé entre le sommet d'une dent 20 et le fond de la denture séparant deux dents 19.

Le deuxième profilé 7b est fixé à la bride 5, par exemple par collage, par sa face opposée à celle portant les dents 20. La face du profilé 7b tournée vers le joint 14 présente des cannelures constituées, comme dans l'exemple de la figure 6, par des rainures 9 et des nervures 10. Cette face cannelée du profilé 7b est adjacente à une face en regard indentée en forme de peigne du joint 14, en formant avec celle-ci un joint à chicanes. Le profilé 7b est en appui contre l'âme 4b de l'encadrement 4 par une quatrième face qui est par exemple plane. Le profilé 7b comporte une âme 16 en un matériau de plus faible densité que sa partie périphérique pour assurer une fonction d'absorbeur de choc.

En cas d'impact d'un oiseau dans les conditions qui ont été décrites précédemment, les zones comprises entre le profilé 7a et la face adjacente indentée du joint 14, entre la face cannelée du profilé 7b et la face adjacente indentée du joint 14, et entre les dents imbriquées 19 et 20 jouent le rôle de joints à chicanes. Ces zones formant joints à chicanes procurent en cas d'impact l'effet d'abaissement de la pression décrit précédemment.

La figure 11 illustre un mode de fixation du profilé 7 sur la bride 5 qui est particulièrement adapté à un profilé 7 en un matériau élastomère. Dans cet exemple, le profilé 7 est pourvu sur l'une de ses faces d'un ou plusieurs pions ou picots 21 présentant une tige 22 et une tête évasée 23. La bride 5 comporte autant d'alésages 24 qu'il y a de pions 21. L'alésage 24 a un diamètre correspondant à celui de ta tige 22 mais inférieur à celui de la tête 23. La longueur de la tige 22 correspond sensiblement à l'épaisseur de la bride 5. Lorsque la tête 23 est enfoncée à force dans l'alésage24 et débouche hors de celui-ci, le pion 21 se trouve immobilisé dans la bride 5. La fixation du profilé 7 peut être complétée par un collage sur la bride 5. En variante, le pion 21 peut être indenté de manière connue pour assurer sa retenue dans l'alésage 24.

La figure 12 illustre une variante de réalisation de l'exemple de la figure 11 suivant laquelle le profilé 7 est également fixé à la bride 5 par un ou plusieurs pions 21. Le profilé 7 de la figure 12 comporte une cavité intérieure 11 pour assurer un amortissement en cas de choc, ainsi que des stries en forme de dents de scie sur ses deux faces qui sont en regard des parois 4a et 4b de l'encadrement 4 et sur sa face en regard du bord périphérique de la glace 1 (non représentée). Les surfaces striées du profilé 7 forment des joints à chicanes avec les surfaces en regard et procurent ainsi l'effet recherché d'abaissement de la pression en cas d'impact d'un oiseau. Le mode de réalisation de la figure 12 est particulièrement adapté à l'équipement de zones très confinées.

## Revendications

1. Verrière d'aéronef comprenant au moins une glace (1) munie d'un joint périphérique (14) ayant sensiblement une section transversale en U complémentaire de la section transversale du bord périphérique de la glace (1), un encadrement (4) contre lequel ladite glace est en appui, au moins une bride (5) de serrage de ladite glace contre ledit encadrement, et au moins une cavité (6) délimitée entre ledit joint périphérique, ledit encadrement et ladite bride, **caractérisée en ce qu'**elle comporte au moins un profilé (7 ; 7a, 7b) adapté pour remplir sensiblement ladite cavité (6) et présentant sur au moins une partie de sa périphérie des reliefs (9, 10 ; 12) définissant avec une surface en regard des chicanes formant joint.

2. Verrière d'aéronef selon la revendication 1, **caractérisée en ce que** lesdits reliefs comprennent des cannelures longitudinales (9, 10).

3. Verrière selon la revendication 2, **caractérisée en ce que** une partie au moins desdites cannelures (9, 10) présentent au moins un bord (18) à arête vive.

4. Verrière d'aéronef selon l'une quelconque des revendications 1 à 3, **caractérisée en ce que** ledit profilé (7 ; 7a, 7b) est en un matériau sensiblement rigide.

5. Verrière selon la revendication 4, **caractérisée en ce que** ledit profilé (7) est métallique.

6. Verrière selon la revendication 4, **caractérisée en ce que** ledit profilé (7) est en matériau synthétique.

7. Verrière selon la revendication 6, **caractérisée en ce que** ledit profilé (7) comporte une âme centrale (16) en un matériau plus souple que sa périphérie.

8. Verrière selon l'une quelconque des revendications 1 à 7, **caractérisée en ce que** ledit profilé (7 ; 7b) est fixé à ladite bride (5).

9. Verrière selon l'une quelconque des revendications 1 à 7, **caractérisée en ce que** ledit profilé comprend un premier élément de profilé (7a) et un second élément de profilé (7b), lesdits éléments de profilé comportant des dentures imbriquées (19, 20) formant entre elles lesdites chicanes.

10. Verrière selon la revendication 9, **caractérisée en ce que** premier élément de profilé (7a) est fixé audit encadrement (4) et ledit second élément de profilé (7b) est fixé à ladite bride (5).

11. Verrière selon l'une quelconque des revendications 1 à 10, **caractérisée en ce que** ledit profilé (7 ; 7a, 7b) s'étend sur toute la périphérie de la glace (1).

12. Verrière selon la revendication 11, **caractérisée en ce que** ledit profilé (7) est en une seule pièce annulaire.

13. Verrière selon la revendication 5, **caractérisée en ce que** ledit profilé (7) est venu de matière avec ladite bride (5).

14. Verrière selon l'une quelconque des revendications 1 à 13, **caractérisée en ce que** lesdits reliefs comprennent au moins une cannelure transversale (12) ménagée dans au moins l'une des faces dudit profilé.

15. Aéronef **caractérisé en ce qu'**il comporte au moins une verrière selon l'une quelconque des revendications 1 à 14.

## Patentansprüche

1. Luftfahrzeug-Kabinenhaube umfassend wenigstens eine mit einer Umfangsdichtung (14) mit im Wesentlichen einem Querschnitt in U-Form ergänzend zum Querschnitt des Umfangrands der Scheibe (1) ausgestattete Scheibe (1), einen Rahmen (4), gegen den sich die Scheibe abstützt, wenigstens einen Flansch (5) zum Spannen der Scheibe am Rahmen, und wenigstens einen zwischen der Umfangsdichtung, dem Rahmen und dem Flansch abgegrenzten Hohlraum (6), **dadurch gekennzeichnet, dass** dieser wenigstens ein zum im Wesentlichen Ausfüllen des Hohlraums (6) ausgebildetes und wenigstens an einem Teil des Umfangs Reliefs (9, 10; 12) zum Definieren von eine Dichtung bildenden Abweisern mit einer Fläche gegenüber aufweisendes Profil (7; 7a, 7b) umfasst.

2. Luftfahrzeug-Kabinenhaube nach Anspruch 1, **dadurch gekennzeichnet, dass** die Reliefs Längsrillen (9, 10) umfassen.

3. Kabinenhaube nach Anspruch 2, **dadurch gekennzeichnet, dass** ein Teil wenigstens der Rillen (9, 10) wenigstens einen Rand (18) mit scharfer Kante aufweist.

4. Luftfahrzeug-Kabinenhaube nach einem der Ansprüche 1 bis 3, **dadurch gekennzeichnet, dass** das Profil (7; 7a, 7b) aus einem im Wesentlichen steifen Material besteht.

5. Kabinenhaube nach Anspruch 4, **dadurch gekennzeichnet, dass** das Profil (7) aus Metall besteht.

6. Kabinenhaube nach Anspruch 4, **dadurch gekennzeichnet, dass** das Profil (7) aus Kunststoff besteht.

7. Kabinenhaube nach Anspruch 6, **dadurch gekennzeichnet, dass** das Profil (7) einen Mittelkern (16) aus einem elastischeren Material als der Umfang umfasst.

8. Kabinenhaube nach einem der Ansprüche 1 bis 7, **dadurch gekennzeichnet, dass** das Profil (7; 7b) am Flansch (5) befestigt ist.

9. Kabinenhaube nach einem der Ansprüche 1 bis 7, **dadurch gekennzeichnet, dass** das Profil ein erstes Profilelement (7a) und ein zweites Profilelement (7b) umfasst, wobei die Profilelemente überlappende Verzahnungen (19, 20) umfassen, die zwischen sich die Abweiser bilden.

10. Kabinenhaube nach Anspruch 9, **dadurch gekennzeichnet, dass** das erste Profilelement (7a) am Rahmen (4) befestigt ist und das zweite Profilelement (7b) am Flansch (5) befestigt ist.

11. Kabinenhaube nach einem der Ansprüche 1 bis 10, **dadurch gekennzeichnet, dass** sich das Profil (7; 7a, 7b) am gesamten Umfang der Scheibe (1) erstreckt.

12. Kabinenhaube nach Anspruch 11, **dadurch gekennzeichnet, dass** das Profil (7) aus einem einzigen ringförmigen Teil besteht.

13. Kabinenhaube nach Anspruch 5, **dadurch gekennzeichnet, dass** das Profil (7) aus dem gleichen Material wie der Flansch (5) besteht.

14. Kabinenhaube nach einem der Ansprüche 1 bis 13, **dadurch gekennzeichnet, dass** die Reliefs wenigstens eine in wenigstens einer der Flächen des Profils angeordnete Querrille (12) umfassen.

15. Luftfahrzeug, **dadurch gekennzeichnet, dass** es wenigstens eine Kabinenhaube nach einem der Ansprüche 1 bis 14 umfasst.

## Claims

1. An aircraft windshield assembly comprising at least one window pane (1) provided with a peripheral seal (14) having substantially a U-shaped cross-section complementary with the cross-section of the peripheral edge of the window pane (1), a frame (4) against which said window pane bears, at least one flange (5) for clamping said window pane against said frame, and at least one cavity (6) delimited between said peripheral seal, said frame and said flange, **characterized in that** it comprises at least one member of profiled cross-section (7 ; 7a, 7b) adapted to substantially fill said cavity (6) and having, over at least part of its periphery, formations in relief (9, 10 ; 12) which with a facing surface define seal-forming baffles.

2. An aircraft windshield assembly according to claim 1, **characterized in that** said formations in relief comprise longitudinal flutes (9, 10).

3. A windshield assembly according to claim 2, **characterized in that** at least some of said flutes (9, 10) have at least one edge with a sharp rib.

4. An aircraft windshield assembly according to any one of claims 1 to 3, **characterized in that**, said member of profiled cross-section (7 ; 7a, 7b) is of a substantially rigid material.

5. A windshield assembly according to claim 4, **characterized in that** said member of profiled cross-section (7) is of metal.

6. A windshield assembly according to claim 4, **characterized in that** said member of profiled cross-section (7) is of synthetic material.

7. A windshield assembly according to claim 6, **characterized in that** said member of profiled cross-section (7) comprises a central core (16) of a material more flexible than its periphery.

8. A windshield assembly according to any one of claims 1 to 7, **characterized in that** said member of profiled cross-section (7 ; 7b) is fastened to said flange (5).

9. A windshield assembly according to any one of claims 1 to 7, **characterized in that** said member of profiled cross-section comprises a first part of profiled cross-section (7a) and a second part of profiled cross-section (7b), said parts of profiled cross-section comprising meshing teeth formations (19, 20) forming said baffles between them.

10. A windshield assembly according to claim 9, **characterized in that** said first part of profiled cross-section (7a) is fastened to said frame (4) and said second part of profiled cross-section (7b) is fastened to said flange (5).

11. A windshield assembly according to any one of claims 1 to 10, **characterized in that** said member of profiled cross-section (7 ; 7a, 7b) extends over the entire periphery of the window pane (1).

12. A windshield assembly according to claim 11, **characterized in that** said member of profiled cross-section (7) is a single annular part.

13. A windshield assembly according to claim 5, **characterized in that** said member of profiled cross-section (7) is integrally formed with said flange (5).

14. A windshield assembly according to any one of claims 1 to 13, **characterized in that** said formations in relief comprise at least one transverse flute (12) formed in at least one of the faces of said member of profiled cross-section.

15. An aircraft, **characterized in that** it comprises at least one windshield assembly according to any one of claims 1 to 14.
